# EUROPÄISCHE PATENTSCHRIFT

(11) **EP 3 541 493 B1**
(45) Veröffentlichungstag und Bekanntmachung des Hinweises auf die Patenterteilung: **06.01.2021**
(21) Anmeldenummer: 17808033.9
(22) Anmeldetag: 17.11.2017
(51) Int. Cl.: B01D 35/18, B01D 36/00, B01D 27/00, B01D 27/08, B01D 27/14

(54) **KRAFTSTOFFFILTERKARTUSCHE UND ZUGEHÖRIGES HERSTELLUNGSVERFAHREN**
FUEL FILTER CARTRIDGE AND ASSOCIATED PRODUCTION METHOD
CARTOUCHE DE FILTRE À CARBURANT ET SON PROCÉDÉ DE PRODUCTION

(30) Priorität: 18.11.2016 DE 102016222742
(43) Veröffentlichungstag der Anmeldung: 25.09.2019
(73) Patentinhaber: Mahle International GmbH, 70376 Stuttgart (DE)
(72) Erfinder: EICHINGER, Thomas, 73663 Berglen (DE); HOFFMANN, Dierk, 71229 Leonberg (DE); PRAPROTNIG, Heinz, 9142 Globasnitz (AT); SCHADLER, Werner, 8430 Seggauberg (AT); WETZL, Mario, 9125 Kühnsdorf (AT)
(74) Vertreter: BRP Renaud & Partner mbB Rechtsanwälte Patentanwälte Steuerberater
(86) Internationale Anmeldenummer: PCT/EP2017/079635
(87) Internationale Veröffentlichungsnummer: WO 2018/091667

(56) Entgegenhaltungen:
- EP-A2- 2 239 034
- DE-A1-102014 010 389
- FR-A1- 2 424 753
- US-A- 6 023 834

## Beschreibung

Die vorliegende Erfindung betrifft eine Kraftstofffilterkartusche zum Filtern und Beheizen von Kraftstoff für eine Brennkraftmaschine, vorzugsweise in einem Kraftfahrzeug, gemäß dem Oberbegriff des Anspruchs 1. Die Erfindung betrifft außerdem ein Verfahren zum Herstellen einer derartigen Kraftstofffilterkartusche.

Eine Kraftstofffilterkartusche, die auch als Kraftstofffilterpatrone bezeichnet werden kann, umfasst üblicherweise ein topfförmiges Gehäuse, das einen in Umfangsrichtung verlaufenden Gehäusemantel, einen Gehäuseboden und eine den Gehäuseboden axial gegenüberliegende Gehäuseöffnung aufweist. In dieses Gehäuse ist ein Filterelement zum Filtern des Kraftstoffs eingesetzt, das im Gehäuse einen Rohraum von einem Reinraum trennt. Die Gehäuseöffnung wird mit Hilfe eines Deckels verschlossen. Ferner sind in üblicher Weise ein Einlassstutzen für den Kraftstoff, der mit dem Rohraum fluidisch verbunden ist, und ein Auslassstutzen für den Kraftstoff vorgesehen, der mit dem Reinraum fluidisch verbunden ist. Grundsätzlich kann der Deckel aus Metall hergestellt sein, wobei er dann zweckmäßig entlang seines Deckelrands mit einem stirnseitigen Gehäuserand am Mantel vercrimpt sein kann, um eine hinreichend dichte und feste Fixierung des Deckels am Gehäuse zu erzielen.

Eine derartige Kartusche kann außerdem mit einer elektrischen Heizeinrichtung zum Beheizen des Kraftstoffs ausgestattet sein, die hierzu im Gehäuse angeordnet ist. Ferner ist ein Elektroanschluss, der zur elektrischen Energieversorgung der Heizeinrichtung dient und der hierzu elektrisch leitend mit der Heizeinrichtung verbunden ist, zweckmäßig an dem genannten Deckel ausgebildet, der hierzu bevorzugt aus einem Kunststoff hergestellt wird. Wird der Deckel jedoch, z.B. zwecks elektrischer Isolation und/oder aus Kostengründen, aus Kunststoff hergestellt, kann zum Herstellen der vorstehend genannten Crimpverbindung eine Druckplatte in Verbindung mit einem Crimpring zum Einsatz kommen. Der Crimpring wird hierzu mit dem Gehäuserand vercrimpt und stützt sich axial an der Druckplatte ab, die sich ihrerseits axial am Deckel abstützt. Eine derartige Druckplatte besteht bevorzugt aus Metall und liegt radial beabstandet vom Crimpring und/oder vom ringförmig umlaufenden Plattenrand flächig am Deckel an. Insbesondere liegt die Druckplatte innerhalb einer vom Crimpring eingefassten Crimpringöffnung flächig am Deckel an. Die Druckplatte aus Metall stützt den Deckel aus Kunststoff axial am Gehäuse ab. Die Verwendung einer metallischen Druckplatte ist vergleichsweise teuer.

Das "Crimpen" ist ein Fügeverfahren, bei dem zwei Komponenten durch plastische Verformung, vorzugsweise in aneinander anliegenden Randbereichen, insbesondere durch Formschluss miteinander verbunden werden, beispielsweise durch Bördeln, Quetschen, Kräuseln oder Falten. Das Herstellen einer derartigen Crimpverbindung erfolgt mit einem entsprechenden Crimpwerkzeug, das einen gewissen Freiraum im Bereich der miteinander zu vercrimpenden Randbereiche benötigt. Dieser Freiraum steht bei einer solchen Kartusche im Bereich des Elektroanschlusses jedoch nicht immer zur Verfügung, insbesondere dann, wenn sich der Elektroanschluss radial bis in den Bereich der Vercrimpung erstreckt. Aufgrund unterschiedlicher Konfigurationen seitens der Fahrzeughersteller bieten die Hersteller der Kraftstofffilterkartuschen entsprechend unterschiedliche Elektroanschlüsse an. Sofern sich je nach Konfiguration des Elektroanschlusses das vorstehend genannte Freiraumproblem für die Crimpverbindung ergibt, müssen entsprechende Anpassungen am Gehäuse und/oder am Deckel der jeweiligen Kraftstofffilterkartusche durchgeführt werden. Dies kann außerdem eine entsprechende Anpassung des Filterelements nach sich ziehen. Dementsprechend müssen die Hersteller der Kraftstofffilterkartuschen für unterschiedliche Konfigurationen der Elektroanschlüsse unterschiedliche Gehäuse, unterschiedliche Deckel und ggf. unterschiedliche Filterelemente bereitstellen, was den Herstellungsaufwand sowie den entsprechenden logistischen Aufwand und somit die Herstellungskosten erhöht.

Eine gattungsgemäße Kraftstofffilterkartusche zum Filtern und Heizen von Kraftstoff ist z.B. aus der EP 2 239 034 A2 bekannt. Bei der bekannten Kartusche wird der in das Gehäuse eingesetzte Kunststoffdeckel mit Hilfe eines Metalldeckels am Gehäuse festgelegt, wobei der Metalldeckel mit einem die Gehäuseöffnung einfassenden, am Gehäusemantel ausgebildeten, stirnseitigen Gehäuserand vercrimpt ist. Der Metalldeckel stützt sich dabei bereichsweise an einer vom Gehäuseboden abgewandten Außenseite des Kunststoffdeckels axial ab.

Aus der US 6 023 834 A ist eine Kraftstofffilterkartusche ohne Heizeinrichtung bekannt, bei welcher ein metallischer Deckel mit relativ großer Wandstärke mit Hilfe eines metallischen Crimprings mit relativ geringer Wandstärke am Gehäuse befestigt ist, wobei der Crimpring mit einem die Gehäuseöffnung einfassenden, am Gehäusemantel ausgebildeten, stirnseitigen Gehäuserand vercrimpt ist. Am Crimpring ist ein ringförmiger Druckbereich ausgebildet, der sich ringförmig geschlossen an einer vom Gehäuseboden abgewandten Außenseite des Deckels axial abstützt.

Aus der DE 10 2014 010 389 A1 ist eine Kraftstofffilterkartusche mit Heizeinrichtung bekannt, bei der die Heizeinrichtung als Deckel ausgestaltet ist, der in das Gehäuse eingesetzt ist und die Gehäuseöffnung verschließt. Bei in das Gehäuse eingesetztem Deckel wird am Gehäusemantel durch Umformung ein innen ringförmig umlaufender Vorsprung erzeugt, der zum Festlegen des Deckels am Gehäuse in eine außen am Deckel ausgebildete ringförmig umlaufende Außennut formschlüssig eingreift.

Die vorliegende Erfindung beschäftigt sich mit dem Problem, für eine Kraftstofffilterkartusche sowie für ein zugehöriges Herstellungsverfahren eine verbesserte Ausführungsform anzugeben, die sich insbesondere durch reduzierte Herstellungskosten auszeichnet und die insbesondere eine vereinfachte Variantenbildung ermöglicht.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, anstelle einer flächigen Druckplatte einen ringförmigen Druckring zu verwenden, um den Deckel axial am Gehäuse abzustützen. Ein solcher quasi linienförmiger Druckring benötigt weniger Material als eine quasi flächige Druckplatte, wodurch sich die Kosten reduzieren lassen. Der Druckring ist aus Metall hergestellt. Der Deckel kann zweckmäßig aus Kunststoff hergestellt sein. Der Deckel kann gewölbt sein, um eine erhöhte Druckstabilität zu besitzen. Im Einzelnen schlägt die Erfindung vor, einen bezüglich des Gehäuses und bezüglich des Deckels separaten Druckring zu verwenden, der direkt oder indirekt am Gehäuse befestigt ist und der an einer vom Gehäuseboden abgewandten Außenseite des Deckels axial am Deckel direkt und/oder indirekt abgestützt ist. Ferner ist ein am Deckel angeordneter, elektrisch leitend mit der Heizeinrichtung verbundener Elektroanschluss zur elektrischen Energieversorgung der Heizeinrichtung vom Druckring eingefasst. Mit anderen Worten, die Dimensionierung des Druckrings und die Positionierung des Elektroanschlusses am Deckel sind so aufeinander abgestimmt, dass der Druckring ohne Kollision um den Elektroanschluss umläuft.

Beispielsweise erstreckt sich der Druckring nur im Bereich eines Deckelrands, der im Vergleich zu einer vom Deckelrand eingefassten Deckelplatte eine größere Wandstärke in Axialrichtung aufweist. Optional kann der Deckel an diesem Deckelrand eine ringförmig umlaufende Radialdichtung aufweisen. Ferner kann vorstehend genannte Wölbung ausschließlich in der Deckelplatte ausgebildet sein, während der Deckelrand an der Außenseite des Deckels in einer Ebene liegt, die sich senkrecht zur Axialrichtung erstreckt.

Erfindungsgemäß ist zum Festlegen des Druckrings am Gehäuse ein Crimpring vorgesehen, der mit einem die Gehäuseöffnung einfassenden, am Gehäusemantel ausgebildeten, stirnseitigen Gehäuserand vercrimpt ist. Hierdurch lässt sich der Druckring besonders einfach mit hinreichender Festigkeit am Gehäuse axial fixieren.

Erfindungsgemäß sind der Crimpring und der Druckring separate Bauteile, so dass der Druckring indirekt, nämlich über den Crimpring am Gehäuse befestigt ist. Erfindungsgemäß ist vorgesehen, dass sich der Crimpring an einer vom Gehäuseboden abgewandten Außenseite des Druckrings axial am Druckring direkt abstützt.

Eine Weiterbildung schlägt vor, den Crimpring so auszugestalten, dass der Crimpring einen radial innenliegenden Innenrand des Druckrings umgreift. Hierdurch ergibt sich eine besonders sichere Fixierung für den Druckring. Außerdem lässt sich dadurch eine vormontierbare Baugruppe, bestehend aus Crimpring und Druckring, erzeugen, die als Einheit am Gehäuse montierbar ist.

Optional kann vorgesehen sein, dass der Druckring an der Außenseite des Deckels axial entweder indirekt, nämlich über einen den Druckring umgreifenden Halteabschnitt des Crimprings, oder direkt abgestützt ist. Ebenso ist denkbar, dass sich der Halteabschnitt nicht über den gesamten Druckring erstreckt, so dass der Druckring nur zum Teil direkt und im Übrigen über den Halteabschnitt indirekt am Deckel abgestützt ist.

Bei einer nicht erfindungsgemäßen Ausführungsform kann der Druckring durch einen umlaufenden Druckringabschnitt des Crimprings gebildet sein, der sich direkt an der Außenseite des Deckels axial abstützt. Mit anderen Worten, der Druckring bildet bezüglich des Crimprings kein separates Teil, sondern ist an diesem integral ausgeformt. Hierdurch verringert sich die Teilezahl für die Kartusche, was deren Herstellungskosten reduziert.

Eine nicht erfindungsgemäße Weiterbildung schlägt vor, den Crimpring im Druckringabschnitt mehrlagig auszugestalten. Im mehrlagigen Druckringabschnitt besitzt der Crimpring eine erhöhte Steifigkeit und Stabilität, um die Funktion des Druckrings, nämlich die axiale Fixierung des Deckels am Gehäuse während des Betriebs der Kartusche, besser erfüllen zu können.

Gemäß einer anderen vorteilhaften Ausführungsform kann vorgesehen sein, dass das Gehäuse am Gehäusemantel eine Ringstufe aufweist, an der sich der Druckring axial direkt oder indirekt abstützt. Hierdurch wird ein axiales Widerlager für den Druckring geschaffen, an dem sich der Druckring axial direkt oder indirekt abstützt. Insbesondere kann der Crimpring den Druckring durch die Vercrimpung gegen die Ringstufe axial vorspannen.

Zusätzlich oder alternativ kann vorgesehen sein, dass das Gehäuse am Gehäusemantel an einer dem Deckel zugewandten Innenseite eine Ringnut aufweist, in die ein radial außenliegender Außenrand des Druckrings radial eingreift. Hierdurch wird letztlich eine axial beidseitig wirkende formschlüssige Fixierung des Druckrings am Gehäuse geschaffen, wodurch die Crimpverbindung axial entlastet wird. Beispielsweise kann diese Ringnut während der Herstellung der Crimpverbindung geschaffen werden.

Für eine andere Ausführungsform wird vorgeschlagen, den Elektroanschluss in einen Basisstecker und einen bezüglich des Basissteckers separaten Adapterstecker aufzugliedern, wobei nur der Basisstecker am Deckel ausgebildet ist, während über den Adapterstecker die Variantenbildung zur Berücksichtigung unterschiedlicher Konfigurationen der Elektroanschlüsse erfolgt. Das bedeutet, dass für alle üblichen Konfigurationen der Elektroanschlüsse nur verschiedene Adapterstecker bereitgestellt werden müssen, während alle übrigen Komponenten der Kraftstofffilterkartusche baugleich ausgeführt werden können. Hierdurch werden die Herstellungskosten signifikant reduziert. Von besonderem Vorteil ist dabei der Umstand, dass sich der Basisstecker am Deckel besonders einfach so positionieren lässt, dass der zur Realisierung der vorstehend genannten Crimpverbindung erforderliche Freiraum stets gewährleistet ist. Da sich die Crimpverbindung vor dem Anbringen des Adaptersteckers realisieren lässt, kann diese problemlos hergestellt werden. Anschließend lässt sich der Adapterstecker anbringen, um abhängig von der jeweiligen Kartuschenvariante die jeweils gewünschte Konfiguration für den Elektroanschluss zu erzeugen. Der Adapterstecker kann auf jede beliebige geeignete Weise mit dem Basisstecker verbunden werden. Dabei kann eine Steckverbindung zum Einsatz kommen. Adapterstecker und Basisstecker können lösbar miteinander verbunden sein, z.B. über eine Clips- oder Rastverbindung. Alternativ sind auch unlösbare Verbindungen denkbar, wie z.B. eine Klebverbindung oder eine Schweißverbindung.

Zweckmäßig besitzt der Elektroanschluss einen am Deckel ausgebildeten Basisstecker, der mit der Heizeinrichtung elektrisch verbunden ist und der mit einem Adapterstecker steckbar ist, der mit der Energieversorgung elektrisch verbindbar ist. Der Basisstecker ist somit am Deckel ausgebildet und steht von dessen Außenseite axial nach außen ab. Der Druckring umschließt in der Umfangsrichtung eine Druckringöffnung, innerhalb der sich der Basisstecker befindet. Druckring und Deckel sind so aufeinander abgestimmt, dass sich der Druckring axial so an der Außenseite des Deckels anbringen lässt, dass dabei der Basisstecker durch die zugehörige Druckringöffnung axial hindurchgeführt wird. Das bedeutet, dass sich durch die axiale Ausrichtung des Basissteckers der Druckring axial auf den Deckel aufsetzen lässt, so dass stets der für das Crimpverfahren benötigte Freiraum gewährleistet ist.

Der Einlassstutzen kann ebenfalls am Deckel angeordnet sein. Ebenso ist denkbar, den Einlassstutzen am Gehäuse, vorzugsweise am Gehäuseboden, anzubringen. Der Auslassstutzen kann ebenfalls am Deckel angeordnet sein. Ebenso ist denkbar, den Auslassstutzen am Gehäuse, vorzugsweise am Gehäuseboden, anzubringen. Sofern der Einlassstutzen und/oder der Auslassstutzen am Deckel angeordnet sind, steht der jeweilige Stutzen von der Außenseite des Deckels axial nach außen ab. Der Druckring fasst dann auch den Einlassstutzen und/oder den Auslassstutzen in der Umfangsrichtung ein. Mit anderen Worten, Druckring und Deckel sind so aufeinander abgestimmt, dass sich der Druckring axial so an der Außenseite des Deckels anbringen lässt, so dass anschließend der Einlassstutzen und/oder der Auslassstutzen sowie der Elektroanschluss vom Druckring in Umfangsrichtung eingefasst sind.

Gemäß einer vorteilhaften Ausführungsform kann der Elektroanschluss außerdem den Adapterstecker aufweisen, der mit dem Basisstecker axial gesteckt ist, so dass elektrische Kontakte des Basissteckers mit elektrischen Kontakten des Adaptersteckers elektrisch verbunden sind. Der Adapterstecker selbst kann beispielsweise so angeordnet und/oder dimensioniert sein, dass der Druckring bei montiertem Adapterstecker nicht am Gehäuse montierbar ist. Insbesondere kann bei montiertem Adapterstecker der Crimpring nicht montiert bzw. mit dem Gehäuse vercrimpt werden. In der Regel fehlt nach dem Anbringen des Adaptersteckers am Basisstecker der für das Crimpverfahren erforderliche Freiraum. Dies stellt jedoch für die Herstellung der hier vorgestellten Kraftstofffilterkartusche kein Problem dar, da der Adapterstecker zweckmäßig erst nach dem Herstellen der Crimpverbindung mit dem Basisstecker gesteckt wird. Der Adapterstecker besitzt nun seinerseits eine elektromechanische Schnittstelle zum elektrischen und mechanischen Verbinden eines entsprechenden komplementären Anschlusssteckers, der mit der, insbesondere fahrzeugseitigen, Energieversorgung elektrisch verbunden ist und der vom jeweiligen Fahrzeughersteller vorgegeben ist. Somit lässt sich über entsprechend angepasste Adapterstecker die im Übrigen identische Kraftstofffilterkartusche an unterschiedliche fahrzeugseitige Anschlussstecker adaptieren.

Vorteilhaft kann der Adapterstecker mittels einer axialen Steckverbindung mechanisch und elektrisch mit dem Basisstecker verbunden sein. Derartige axiale Steckverbindungen lassen sich besonders einfach montieren, wodurch die Herstellung zuverlässig und zeitsparend durchführbar ist.

Zweckmäßig kann die Steckverbindung eine Verrastung aufweisen, welche die mechanische Verbindung zwischen Adapterstecker und Basisstecker gegen ein Herausziehen entgegen der axialen Steckrichtung sichert. Üblicherweise arbeitet eine derartige Verrastung mit einem Formschluss.

Eine andere vorteilhafte Ausführungsform sieht vor, dass sich der mit dem Basisstecker gesteckte Adapterstecker radial bis zum Druckring und/oder zum Crimpring erstreckt. In diesem Fall besitzt der Adapterstecker eine Konfiguration, die ein Crimpen bei montiertem Adapterstecker behindern würde. Die vorstehend genannte elektromechanische Schnittstelle des Adaptersteckers kann ebenfalls als Steckverbindung konfiguriert sein. Dabei kann die Steckrichtung dieser Steckverbindung parallel zur Steckrichtung der Steckverbindung zwischen Adapterstecker und Basisstecker ausgerichtet sein. Ebenso ist es möglich, den Adapterstecker als Winkelstecker auszugestalten, bei dem die Steckrichtung der Steckverbindung der elektromechanischen Schnittstelle gegenüber der Steckrichtung der Steckverbindung zwischen Adapterstecker und Basisstecker geneigt verläuft. Beispielsweise können sich die beiden Steckrichtungen rechtwinklig zueinander erstrecken.

Der Crimpring kann am Druckring befestigt sein, beispielsweise durch eine Klemmverbindung oder eine Lötverbindung oder eine Schweißverbindung oder eine Klebverbindung. Ebenso ist denkbar, dass der Crimpring lose am Druckring axial anliegt, so dass also keine feste Verbindung zwischen Crimpring und Druckring vorliegt.

Sofern Einlassstutzen und/oder Auslassstutzen sowie der Basisstecker am Decken angeordnet sind, bildet die Druckringöffnung für den Einlassstutzen und/oder den Auslassstutzen sowie den Basisstecker eine einzige, gemeinsame Durchtrittsöffnung.

Bevorzugt kann der Deckel aus Kunststoff hergestellt sein, wobei insbesondere ein Steckergehäuse des Basissteckers integral am Deckel ausgeformt ist. Optional können auch der Einlassstutzen und/oder der Auslassstutzen integral am Deckel ausgeformt sein. Hierdurch erhält der Deckel einen hohen Integrationsgrad, was die Herstellungskosten der Kraftstofffilterkartusche reduziert. Die metallischen elektrischen Kontakte des Basissteckers können entweder nachträglich in das Steckergehäuse eingebaut sein oder vom Kunststoff des Steckergehäuses bzw. des Deckels umspritzt sein.

Der Deckel kann an einem radial außenliegenden Deckelrand mit einer umlaufenden Dichtung gegenüber dem Gehäusemantel abgedichtet sein. Durch diese Dichtung zwischen Deckel und Gehäusemantel muss die Crimpverbindung zwischen Crimpring und Gehäuse nicht zwingend flüssigkeitsdicht ausgestaltet sein. Die Crimpverbindung bewirkt dann nur die mechanische Fixierung des Deckels im Gehäuse bzw. des Druckrings am Gehäuse. Diese Dichtung kann integral am Deckelrand ausgeformt sein. Ebenso kann diese Dichtung aus einem anderen Kunststoff an den Deckelrand angespritzt oder angeschäumt sein. Alternativ kann eine separate Dichtung, z.B. in Form eines O-Rings zum Einsatz kommen. Dementsprechend kann der Deckelrand bei einer vorteilhaften Ausführungsform radial außen eine Umfangsnut aufweisen, in die eine radial wirkende Dichtung eingesetzt ist, die sich radial am Gehäusemantel abstützt.

Besonders vorteilhaft ist eine Ausführungsform, bei welcher die Heizeinrichtung am Deckel ausgebildet ist und an einer dem Gehäuseboden zugewandten Innenseite des Deckels angeordnet ist. Diese Bauweise hat den Vorteil, dass die Heizeinrichtung am Deckel vormontierbar ist und dass bei der Montage der Deckel zusammen mit der Heizeinrichtung in das Gehäuse einsetzbar ist. Des Weiteren kann auf diese Weise die Heizeinrichtung nahe am Einlassstutzen angeordnet werden, um den Kraftstoff vor Erreichen des Filterelements bedarfsabhängig zu beheizen.

Vorteilhaft ist eine Weiterbildung, bei der die Heizeinrichtung eine Scheibe aufweist, die einen rohseitigen, also einen auf der Rohseite bzw. im Rohraum angeordneten, Heizraum axial begrenzt, der axial zwischen der Scheibe und dem Deckel ausgebildet ist. Der Einlassstutzen ist mit diesem Heizraum fluidisch verbunden. Sofern der Einlassstutzen zweckmäßig am Deckel ausgebildet ist, kann der Einlassstutzen in diesen Heizraum direkt einmünden. Die Scheibe weist zumindest eine axiale Verbindungsöffnung auf, die den Heizraum fluidisch mit einem rohseitigen Zuströmraum verbindet, der seinerseits zu einer rohseitigen Anströmseite des Filterelements führt. Durch diese Bauweise wird der zuströmende Kraftstoff gezwungen, zunächst einen vergleichsweise kleinen Heizraum zu durchströmen, in dem die Heizeinrichtung die Beheizung des Kraftstoffs bewirkt. Beispielsweise kann die Scheibe aus einem Metall bestehen. Insbesondere wirkt die Scheibe dabei als Wärmeleitplatte, die einerseits wärmeleitend mit wenigstens einem Heizelement der Heizeinrichtung verbunden ist und andererseits direkt mit dem Kraftstoff in Kontakt steht. Ein derartiges Heizelement kann beispielsweise durch ein PTC-Element gebildet sein, wobei PTC für "Positive Temperature Coefficient" steht.

Besonders vorteilhaft ist eine Weiterbildung, bei welcher die Scheibe als Ringscheibe ausgestaltet ist, die einen an der Innenseite des Deckels ausgebildeten, axial nach innen abstehenden zentralen Anschlussstutzen in Umfangsrichtung umschließt. Der Auslassstutzen mündet in einem reinseitigen, also einem auf der Reinseite bzw. im Reinraum angeordneten, Abströmraum, der vom Anschlussstutzen in Umfangsrichtung umschlossen ist. Hierdurch ergibt sich ein besonders einfacher Aufbau für die Heizeinrichtung im Deckel. Innerhalb des Gehäuses strömt der Kraftstoff von einer Abströmseite des Filterelements im Reinraum bzw. auf der Reinseite bis zum Abströmraum.

Ein erfindungsgemäßes Verfahren zum Herstellen einer Kraftstofffilterkartusche der vorstehend beschriebenen Art umfasst folgende Schritte:
- Erster Schritt:: Einsetzen des Filterelements in das Gehäuse.
- Zweiter Schritt:: Einsetzen des Deckels und der Heizeinrichtung in das Gehäuse.
- Dritter Schritt:: Aufsetzen des Druckrings, zweckmäßig derart, dass der Elektro-anschluss, gegebenenfalls der Basisstecker, sofern er vorhanden ist, und gegebenenfalls der Einlassstutzen, sofern er am Deckel ausgebildet ist, und gegebenenfalls der Auslassstutzen, sofern er am Deckel ausgebildet ist, die Druckringöffnung axial durchsetzen.
- Vierter Schritt:: Fixieren des Druckrings am Gehäuse. Diese Fixierung kann direkt oder indirekt erfolgen. Erfindungsgemäß erfolgt die Fixierung mittels einer Crimpverbindung. Erfindungsgemäß kommt hierzu besagter Crimpring zum Einsatz. In diesem Fall wird dann ein Vercrimpen des Crimprings mit dem Gehäuserand durchgeführt.

Zweckmäßig kann nachfolgend in einem fünften Schritt der Adapterstecker mit dem Basisstecker gesteckt werden, sofern der Elektroanschluss diese zweiteilige Ausgestaltung besitzt.

Die Anbringung des erfindungsgemäß verwendeten Crimprings kann im dritten Schritt erfolgen, wenn der Crimpring fest mit dem Druckring verbunden ist. Alternativ kann die Anbringung des erfindungsgemäß verwendeten Crimprings auch im vierten Schritt erfolgen, wenn Crimpring und Druckring separate Bauteile sind und wenn der Crimpring bezüglich des Druckrings lose ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine isometrische Schnittansicht einer Kraftstofffilterkartusche,
- Fig. 2: eine isometrische Ansicht eines Deckels der Kartusche von oben bzw. von außen,
- Fig. 3: eine isometrische Ansicht des Deckels von unten bzw. von innen,
- Fig. 4: eine isometrische Ansicht eines Adaptersteckers,
- Fig. 5: eine vergrößerte isometrische Ansicht der Kraftstofffilterkartusche im Bereich eines Druckrings bei einer erfindungsgemäßen ersten Ausführungsform,
- Fig. 6: eine isometrische Ansicht des Druckrings der erfindungsgemäßen ersten Ausführungsform,
- Fig. 7: eine vergrößerte isometrische Ansicht der Kraftstofffilterkartusche im Bereich des Druckrings wie in Fig. 5, jedoch bei einer nicht erfin-dungsgemäßen zweiten Ausführungsform vor dem Vercrimpen eines Crimprings,
- Fig. 8: eine vergrößerte isometrische Ansicht im Bereich des Druckrings wie in Fig. 7, jedoch nach dem Vercrimpen des Crimprings.

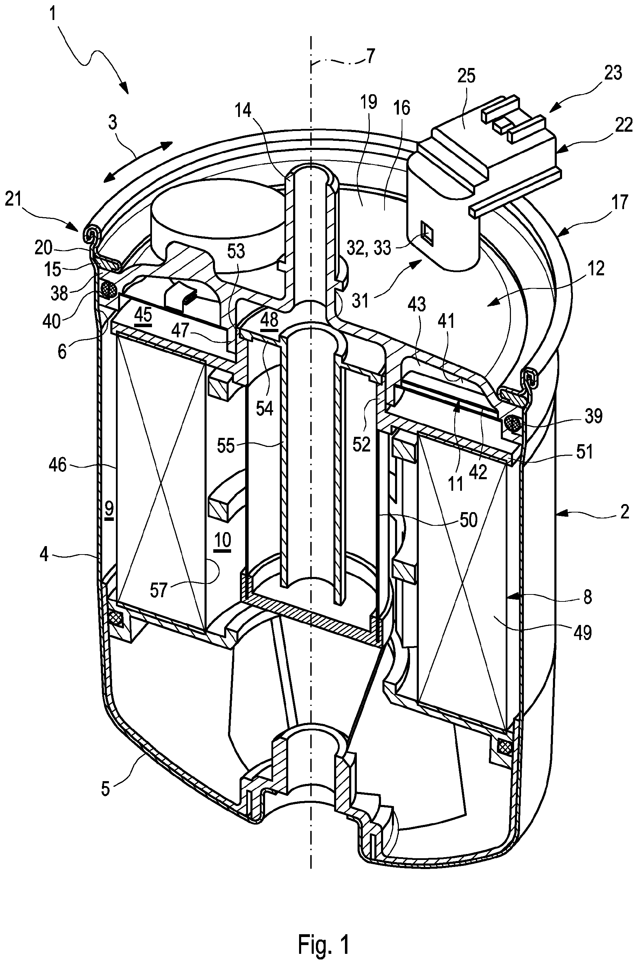

Entsprechend den Fig. 1 bis 8 umfasst eine Kraftstofffilterkartusche 1, die im Folgenden auch kurz als Kartusche 1 bezeichnet werden kann und die zum Filtern und zum Beheizen von Kraftstoff zur Versorgung einer Brennkraftmaschine dient, ein Gehäuse 2, das gemäß Fig. 1 topfförmig ausgestaltet ist, das einen in der durch Doppelpfeile angedeuteten Umfangsrichtung 3 umlaufenden Gehäusemantel 4, einen Gehäuseboden 5 und eine dem Gehäuseboden 5 axial gegenüberliegende Gehäuseöffnung 6 aufweist. Die Axialrichtung ist dabei durch eine Längsmittelachse 7 des Gehäuses 2 bzw. der Kartusche 1 definiert und erstreckt sich parallel zur Längsmittelachse 7. Die Radialrichtung verläuft quer zur Axialrichtung und die Umfangsrichtung 3 läuft um die Längsmittelachse 7 um.

Ferner umfasst die Kartusche 1 ein Filterelement 8 zum Filtern des Kraftstoffs, das in das Gehäuse 2 eingesetzt ist und das im Gehäuse 2 einen Rohraum 9 von einem Reinraum 10 trennt. Ferner umfasst die Kartusche 1 eine elektrische Heizeinrichtung 11 zum Beheizen des Kraftstoffs, die im Gehäuse 2 angeordnet ist. Ein Deckel 12 ist in das Gehäuse 2 eingesetzt und verschließt dabei die Gehäuseöffnung 6. Ferner sind ein Einlassstutzen 13, der mit dem Rohraum 9 fluidisch verbunden ist, sowie ein Auslassstutzen 14 vorgesehen, der mit dem Reinraum 10 fluidisch verbunden ist. Im gezeigten Beispiel sind der Einlassstutzen 13 und der Auslassstutzen 14 am Deckel 12 ausgebildet. Ebenso ist denkbar, den Einlassstutzen 13 und/oder den Auslassstutzen 14 am Gehäuse 2, vorzugsweise am Gehäuseboden 5 auszubilden. Durch den Einlassstutzen 13 wird der Kraftstoff der Kartusche 1 zugeführt. Durch den Auslassstutzen 14 wird der Kraftstoff aus der Kartusche 1 abgeführt.

Außerdem ist die Kartusche 1 hier mit einem Druckring 15 ausgestattet, der an einer vom Gehäuseboden 5 abgewandten Außenseite 16 des Deckels 12 axial am Deckel 12 anliegt. Schließlich ist bei den hier vorgestellten, bevorzugten Ausführungsformen ein Crimpring 17 vorgesehen, mit dessen Hilfe der Druckring 15 am Gehäuse 2 befestigt ist. Der Crimpring 17 ist mit einem Gehäuserand 20 vercrimpt, der am Mantel 4 stirnseitig ausgebildet ist und der die Gehäuseöffnung 6 einfasst. Durch die Vercrimpung zwischen Crimpring 17 und Gehäuserand 20 wird eine hochfeste Crimpverbindung 21 geschaffen, die im Beispiel als Bördelverbindung ausgestaltet ist.

Der Druckring 15 erzeugt eine ringförmige und randseitige Abstützung des Deckels 12. Hierzu liegt der Druckring 15 zweckmäßig im Bereich eines radial außenliegenden Deckelrands 38 des Deckels 12 in Umfangsrichtung 3 ringförmig geschlossen am Deckel 12 an. Der Deckelrand 38 umschließt eine Deckelplatte 19. Die Deckelplatte 19 kann zweckmäßig nach außen, also vom Filterelement 8 weggerichtet gewölbt sein, beispielsweise um die Druckstabilität des Deckels 12 zu verbessern.

Für den Betrieb der Heizeinrichtung 11 muss diese mit einer externen elektrischen Energieversorgung elektrisch verbunden werden. Zu diesem Zweck ist die Kartusche 1 mit einem Elektroanschluss 22 ausgestattet. Dieser Elektroanschluss 22 ist einerseits mit der Heizeinrichtung 11 elektrisch leitend verbunden und besitzt andererseits eine elektromechanische Schnittstelle 23, über die der Elektroanschluss 22 mit der externen Energieversorgung elektrisch verbunden werden kann. Der Elektroanschluss 22 befindet sich am Deckel 12 und ist vom Druckring 15 sowie vom Crimpring 17 eingefasst.

Wie erwähnt ist zum Festlegen des Druckrings 15 am Gehäuse 2 der Crimpring 17 vorgesehen, der hierzu mit dem die Gehäuseöffnung 6 einfassenden, am Gehäusemantel 4 ausgebildeten, stirnseitigen Gehäuserand 20 vercrimpt ist.

Gemäß einer in den Fig. 1, 5 und 6 gezeigten ersten Ausführungsform, sind der Crimpring 17 und der Druckring 15 separate Bauteile, so dass der Druckring 15 indirekt über den Crimpring 17 am Gehäuse 2 befestigt ist. Ferner stützt sich der Crimpring 17 an einer vom Gehäuseboden 5 abgewandten Außenseite 18 des Druckrings 15 axial am Druckring 15 ab. Im Beispiel umgreift der Crimpring 17 einen radial innenliegenden Innenrand 27 des Druckrings 15. Dabei umgreift ein Halteabschnitt 28 des Crimprings 17 den Innenrand 27 und greift in eine am Druckring 15 ausgebildete ringförmig umlaufende Stufe 26 ein, die am Innenrand 27 an einer dem Deckel 12 zugewandten Seite ausgebildet ist.

Durch den in die Stufe 26 eingreifenden Halteabschnitt 28 ist der Druckring 15 axial an der Außenseite 16 des Deckels 12 einerseits indirekt, nämlich über den Halteabschnitt 28 des Crimprings 17 und andererseits direkt, nämlich in dem an die Stufe 26 anschließenden Bereich abgestützt.

Die Verwendung eines separaten Druckrings 15 ermöglicht eine entsprechende Materialauswahl und Dimensionierung.

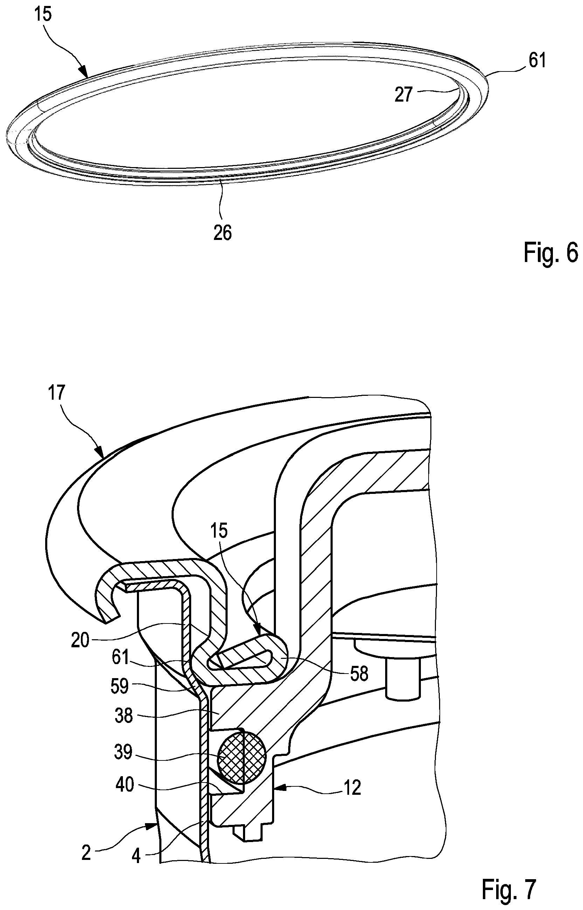

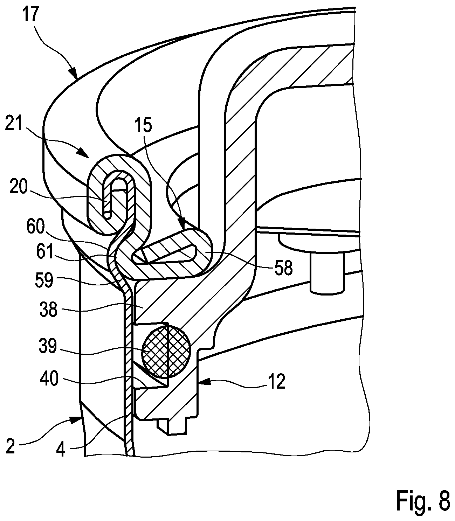

Die Fig. 7 und 8 zeigen eine zweite Ausführungsform zur Realisierung des Druckrings 15. Bei dieser zweiten Ausführungsform ist der Druckring 15 durch einen umlaufenden Druckringabschnitt 58 des Crimprings 17 gebildet, der sich direkt an der Außenseite 16 des Deckels 12 axial abstützt. Diese integrale Bauweise, bei der Druckring 15 und Crimpring 17 ineinander integriert sind, kann auf ein separates Bauteil verzichtet werden. Im Beispiel ist der Crimpring 17 im Druckringabschnitt 58 mehrlagig, nämlich z.B. zweilagig ausgestaltet. Dies wird durch eine entsprechende Faltung erreicht. Ebenso ist eine Ausgestaltung mit drei oder mehr Lagen denkbar.

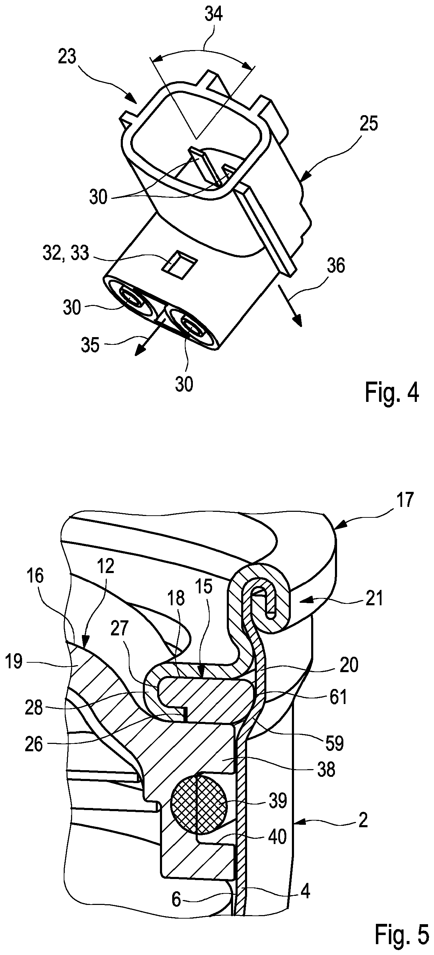

Bei beiden Ausführungsformen der Fig. 5 und 6 einerseits und der Fig. 7 und 8 andererseits. Kann das Gehäuse 2 am Gehäusemantel 4 eine Ringstufe 59 aufweisen, an der sich der Druckring 15 axial abstützt. Der Druckring 15 stützt sich dabei mit seinem radial außen liegenden Außenrand 61 an dieser Ringstufe 59 axial ab. Im Beispiel der Fig. 7 und 8 ist außerdem vorgesehen, dass das Gehäuse 2 am Gehäusemantel 4 eine Ringnut 60 aufweist, in die der radial außenliegende Außenrand 61 des Druckrings 15 radial eingreift. Somit ist der Druckring 15 axial in beiden Richtungen direkt am Gehäuse 2 fixiert. Wie sich den Fig. 7 und 8 entnehmen lässt, wird dieser formschlüssige Eingriff zwischen Druckring 15 und Ringnut 60 während der Vercrimpung hergestellt, indem dabei der Gehäuserand 20 radial nach innen umgebogen wird, so dass er den Druckring 15 am Außenrand 61 umgreift.

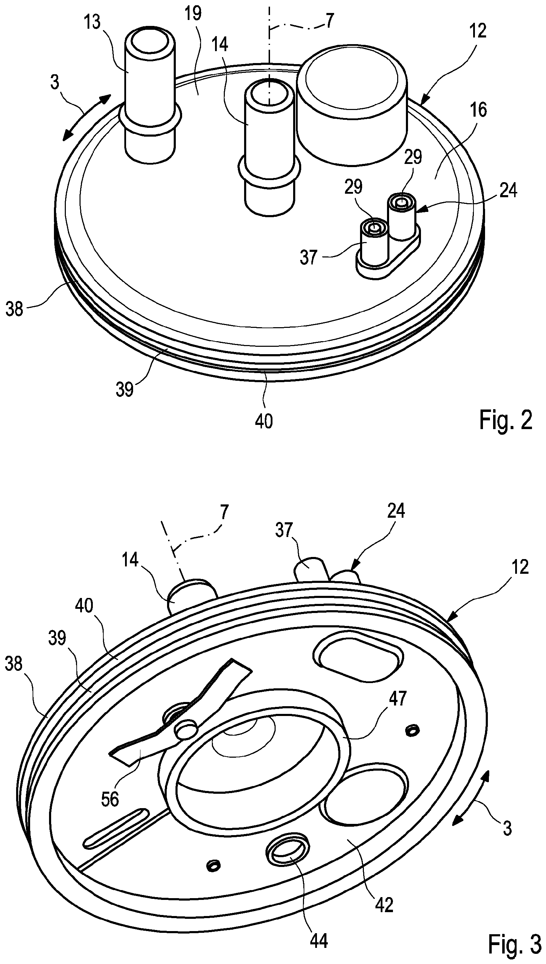

Bei der hier vorgestellten Kartusche 1 umfasst der Elektroanschluss 22 einen am Deckel 12 ausgebildeten, in Fig. 2 erkennbaren Basisstecker 24 und einen bezüglich des Basissteckers 24 separaten, in den Fig. 1 und 4 gezeigten Adapterstecker 25. Während der Basisstecker 24 mit der Heizeinrichtung 11 elektrisch leitend verbunden ist, weist der Adapterstecker 25 die vorstehend genannte Schnittstelle 23 zur Verbindung mit der Energieversorgung auf. Der Adapterstecker 25 ist mit dem Basisstecker 24 steckbar. Im gesteckten Zustand bilden sie gemeinsam den Elektroanschluss 22.

Der Einlassstutzen 13, der Auslassstutzen 14 und der Basisstecker 24 sind hier am Deckel 12 angeordnet und stehen von dessen Außenseite 16 axial nach außen ab. Ferner erstrecken sich Einlassstutzen 13, Auslassstutzen 14 und Basisstecker 24 parallel zueinander und parallel zur Längsmittelachse 7, also axial und durchsetzen dabei den Druckring 15 und den Crimpring 17 axial.

Wenn der Adapterstecker 25 mit dem Basisstecker 24 zur Komplettierung des Elektroanschlusses 22 gesteckt ist, sind elektrische Kontakte 29 des Basissteckers 24 mit elektrischen Kontakten 30 des Adaptersteckers 25 elektrisch verbunden. Zweckmäßig ist zum Stecken von Adapterstecker 25 und Basisstecker 24 eine axiale Steckverbindung 31 vorgesehen, die beim axialen Stecken gleichzeitig eine elektrische Verbindung und eine mechanische Verbindung zwischen Adapterstecker 25 und Basisstecker 24 erzeugt. Insbesondere kann diese Steckverbindung 31 optional mit einer Verrastung 32 ausgestattet sein, die den Adapterstecker 25 gegen ein Abziehen vom Basisstecker 24 entgegen der axialen Steckrichtung sichert. Die Verrastung 32 erzeugt hierzu eine mechanische Verbindung zwischen Adapterstecker 25 und Basisstecker 24, zweckmäßig durch Formschluss. Erkennbar ist in den Fig. 1 und 4 rein exemplarisch eine Rastöffnung 33 vorgesehen, die am Adapterstecker 25 ausgebildet ist und in die eine hier nicht erkennbare Rastnase eingreift, die am Basisstecker 24 ausgebildet ist.

Im hier gezeigten Beispiel ist der Adapterstecker 25 als Winkelstecker ausgestaltet, um einen in Fig. 4 eingetragenen Neigungswinkel 34 zwischen einer ersten Steckrichtung 35 und einer zweiten Steckrichtung 36 zu realisieren. Die erste Steckrichtung 35 ist durch die Steckverbindung 31 zwischen Adapterstecker 25 und Basisstecker 24 definiert und erstreckt sich hier parallel zur Längsmittelachse 7, also axial. Die zweite Steckrichtung 36 ist durch die Schnittstelle 23 des Adaptersteckers 25 definiert. In dieser zweiten Steckrichtung 36 muss ein zur Schnittstelle 23 komplementärer, nicht gezeigter Anschlussstecker, der mit der Energieversorgung verbunden ist, gesteckt werden, um die elektromechanische Verbindung zu erzielen. Grundsätzlich können die beiden Steckrichtungen 35, 36 parallel zueinander verlaufen, also axial. Gezeigt ist jedoch eine Ausgestaltung des Adaptersteckers 25 als Winkelstecker, um einen von 0 Grad abweichenden Neigungswinkel 34 zwischen den beiden Steckrichtungen 35, 36 zu ermöglichen. Im Beispiel beträgt der Neigungswinkel 34 etwa 90°. Es ist klar, dass grundsätzlich beliebige Neigungswinkel realisierbar sind.

Beim hier gezeigten Beispiel ist der Adapterstecker 25 außerdem so geformt, dass er sich im gesteckten Zustand radial bis zum Crimpring 17 erstreckt, so dass sich eine radiale Überlappung zwischen Adapterstecker 25 und Crimpring 17 ergibt, und zwar in einer Axialprojektion. Erkennbar besitzt der Adapterstecker 25 einen Axialabstand zum Crimpring 17. Dennoch kann diese radiale Überlappung zwischen Adapterstecker 25 und Crimpring 17 dazu führen, dass die Crimpverbindung 21 bei gestecktem Adapterstecker 25 nicht herstellbar ist. Bei fehlendem Adapterstecker 25 ist jedoch axial oberhalb des Crimprings 17 ausreichend Freiraum vorhanden, um ein Crimpwerkzeug zum Herstellen der Crimpverbindung 21 anzuordnen.

Vorteilhaft ist der Deckel 12 aus einem Kunststoff hergestellt. Insbesondere können dann der Einlassstutzen 13, der Auslassstutzen 14 und ein Steckergehäuse 37 des Basissteckers 24 integral am Deckel 12 ausgeformt sein. Der Deckel 12 bildet somit mit dem Einlassstutzen 13, dem Auslassstutzen 14 und dem Steckergehäuse 37 ein einstückig hergestelltes Spritzformteil.

Der Deckel 12 weist radial außen den umlaufenden Deckelrand 38 auf. An diesem Deckelrand 38 kann der Deckel 12 über eine radial wirkende Dichtung 39, die nachfolgend auch als Radialdichtung 39 bezeichnet werden kann, radial am Mantel 4 abgestützt sein. Die Radialdichtung 39 kann dabei integral am Deckelrand 38 ausgeformt sein. Ebenso ist denkbar, die Radialdichtung 39 an den Deckelrand 38 anzuspritzen oder anzuschäumen. Gezeigt ist jedoch eine Ausführungsform, bei der die Radialdichtung 39 durch ein separates Bauteil gebildet ist, das in eine am Deckelrand 38 ausgebildete, umlaufende Umfangsnut 40 eingesetzt ist.

Der Crimpring 17 kann bezüglich des Druckrings 15 lose angeordnet sein, also ohne feste Verbindung zum Druckring 15 axial daran anliegen. Ebenso ist denkbar, den Crimpring 17 am Druckring 15 zu fixieren, beispielsweise mittels einer Kleb-, Schweiß- oder Lötverbindung. Gezeigt ist in den Fig. 1 und 5 eine Clips- oder Klemmverbindung, die den Crimpring 17 am Druckring 15 fixiert. Hierzu kann am Druckring 15 eine Ringstufe 26 ausgebildet sein.

Der Druckring 15 ist zweckmäßig aus Metall hergestellt, z.B. als Stanzteil, bei dem gleichzeitig auch die Ringstufe 26 hergestellt werden kann. Der Crimpring 17 und das Gehäuse 2 sind Metallteile, vorzugsweise Blechformteile. Das Gehäuse 2 ist bevorzugt ein Tiefziehteil. Im Unterschied dazu ist der Deckel 12 zweckmäßig ein Kunststoffteil.

Gemäß den Fig. 1 bis 3 ist die Heizeinrichtung 11 ausschließlich am Deckel 12 ausgebildet und hierzu an einer dem Gehäuseboden 5 zugewandten Innenseite 41 des Deckels 12 angeordnet. Die Heizeinrichtung 11 weist eine Scheibe 42 auf. Axial zwischen dieser Scheibe 42 und dem Deckel 12 ist ein Heizraum 43 ausgebildet. In diesem Heizraum 43 steht der Kraftstoff unmittelbar mit der Scheibe 42 in Kontakt. Die Heizeinrichtung 11 kann ferner wenigstens ein hier nicht gezeigtes elektrisches Heizelement aufweisen, um Wärme in die Scheibe 42 einzuleiten. Ein derartiges Heizelement kann beispielsweise durch ein PTC-Element gebildet sein. Somit kann Wärme im Heizraum 43 von der Scheibe 42 direkt in den Kraftstoff eingeleitet werden.

Der Einlassstutzen 13 mündet nun in diesen Heizraum 43. Die Scheibe 42 besitzt gemäß Fig. 3 zumindest eine axiale Verbindungsöffnung 44, durch die hindurch der Heizraum 43 fluidisch mit einem rohseitigen Zuströmraum 45 verbunden ist. Dieser Zuströmraum 45 führt dann zu einer Anströmseite 46 des Filterelements 8. Im Beispiel ist das Filterelement 8 als Ringfilterelement konfiguriert, das im Betrieb radial von außen nach innen durchströmt wird. Dementsprechend ist die Anströmseite 46 des Filterelements 8 hier radial außen zu finden, während sich eine Abströmseite 57 des Filterelements 8 radial innen befindet. Ferner ist im Beispiel die Scheibe 42 als Ringscheibe ausgestaltet, so dass sie einen Anschlussstutzen 47 des Deckels 12 in Umfangsrichtung 3 einfasst. Der Anschlussstutzen 47 ist dabei an der Innenseite 41 des Deckels 12 ausgebildet und steht davon axial nach innen ab. Der Anschlussstutzen 47 umschließt in der Umfangsrichtung 3 einen Abströmraum 48, in den der Auslassstutzen 14 mündet. Ferner ist das Filterelement 8 reinseitig an diesen Anschlussstutzen 47 angeschlossen, so dass der Abströmraum 48 fluidisch mit der Reinseite 10 verbunden ist.

Im Beispiel der Fig. 1 weist das Filterelement 8 einerseits einen Filterkörper 49 zum Filtern des Kraftstoffs und andererseits einen Wasserabscheider 50 auf, der im Kraftstoff enthaltendes Wasser vom Kraftstoff trennt. Das Filterelement 8 weist außerdem an einer dem Deckel 12 zugewandten axialen Stirnseite eine offene Endscheibe 51 auf, von der ein umlaufender Kragen 52 axial absteht. Mit diesem Kragen 52 ist das Filterelement 8 in den Anschlussstutzen 47 axial eingesteckt, um im Reinraum 10 eine fluidische Verbindung von der Abströmseite 57 des Filterelements 8 zum Zuströmraum 48 herzustellen. Am Kragen 52 ist hierbei eine Radialdichtung 53 ausgeformt, die mit dem Anschlussstutzen 47 zusammenwirkt. Im Bereich dieser Dichtung 53 ist ein Ringkragen 54 abgestützt, der ein Tauchrohr 55 in der Umfangsrichtung 3 einfasst. Das Tauchrohr 55 taucht axial in den Reinraum 10 ein und verbindet somit den Reinraum 10 innerhalb des Wasserabscheiders 50 mit dem Zuströmraum 48.

In Fig. 3 ist außerdem eine Vorspannfeder 56 gezeigt, mit deren Hilfe das vorstehend genannte Heizelement gegen die Scheibe 42 angepresst werden kann, um die Wärmeübertragung zwischen Heizelement und Scheibe 42 zu verbessern.

Nachfolgend wird ein Verfahren zum Herstellen einer derartigen Kartusche 1 näher beschrieben.

Zunächst wird das Filterelement 8 in das Gehäuse 2 eingesetzt. Anschließend werden der Deckel 12 und die Heizeinrichtung 11 in das Gehäuse 2 eingesetzt. Zweckmäßig bilden dabei Deckel 12 und Heizeinrichtung 11 eine vormontierbare Baugruppe, so dass der Deckel 12 gemeinsam mit der daran montierten Heizeinrichtung 11 in das Gehäuse 2 eingesetzt werden kann.

Anschließend wird der Druckring 15 aufgesetzt. Bei diesem Vorgang ist der Adapterstecker 25 nicht am Basisstecker 24 angebracht.

Anschließend wird der Crimpring 17 mit dem Gehäuserand 20 vercrimpt, wobei auch hier der Adapterstecker 25 noch nicht mit dem Basisstecker 24 gesteckt ist. Der Crimpring 17 kann dabei je nach Ausführungsform gemeinsam mit dem Druckring 15 oder separat zum Druckring 15 aufgesetzt werden, um die Vercrimpung durchzuführen. Sofern der Crimpring 17 fest mit dem Druckring 15 verbunden ist oder darin integriert ist, erfolgt mit dem Aufsetzen des Druckrings 15 auf den Deckel 12 gleichzeitig das Aufsetzen des Crimprings 17. Ist dagegen keine feste Verbindung zwischen Crimpring 17 und Druckring 15 vorgesehen, kann der Crimpring 17 auch anschließend, quasi unabhängig, vom Druckring 15 angesetzt werden.

Erst nach dem Vercrimpen zwischen Crimpring 17 und Gehäuserand 20 wird der Adapterstecker 25 montiert, nämlich mit dem Basisstecker 24 gesteckt. Fig. 1 zeigt den Zustand nach dem Vercrimpen und nach dem Montieren des Adaptersteckers 25.

## Patentansprüche

1. Kraftstofffilterkartusche (1) zum Filtern und Beheizen von Kraftstoff für eine Brennkraftmaschine,
- mit einem topfförmigen Gehäuse (2), das einen in Umfangsrichtung (3) umlaufenden Gehäusemantel (4), einen Gehäuseboden (5) und eine dem Gehäuseboden (5) axial gegenüberliegende Gehäuseöffnung (6) aufweist,
- mit einem in das Gehäuse (2) eingesetzten Filterelement (8) zum Filtern des Kraftstoffs, das im Gehäuse (2) einen Rohraum (9) von einem Reinraum (10) trennt,
- mit einer im Gehäuse (2) angeordneten elektrischen Heizeinrichtung (11) zum Beheizen des Kraftstoffs,
- mit einem in das Gehäuse (2) eingesetzten Deckel (12) zum Verschließen der Gehäuseöffnung (6),
- mit einem Einlassstutzen (13) für den Kraftstoff, der mit dem Rohraum (9) fluidisch verbunden ist,
- mit einem Auslassstutzen (14) für den Kraftstoff, der mit dem Reinraum (10) fluidisch verbunden ist,
- mit einem am Deckel (12) angeordneten Elektroanschluss (22) zur elektrischen Energieversorgung der Heizeinrichtung (11), der elektrisch leitend mit der Heizeinrichtung (11) verbunden ist,
**dadurch gekennzeichnet,**
- **dass** die Kraftstofffilterkartusche (1) einen bezüglich des Gehäuses (2) und bezüglich des Deckels (12) separaten Druckring (15) aus Metall aufweist, der den Elektroanschluss (22) einfasst, der direkt oder indirekt am Gehäuse (2) befestigt ist und der an einer vom Gehäuseboden (5) abgewandten Außenseite (16) des Deckels (12) axial am Deckel (12) direkt und/oder indirekt abgestützt ist,
- **dass** zum Festlegen des Druckrings (15) am Gehäuse (2) ein Crimpring (17) vorgesehen ist, der mit einem die Gehäuseöffnung (6) einfassenden, am Gehäusemantel (4) ausgebildeten, stirnseitigen Gehäuserand (20) vercrimpt ist,
- **dass** der Crimpring (17) und der Druckring (15) separate Bauteile sind, so dass der Druckring (15) indirekt über den Crimpring (17) am Gehäuse (2) befestigt ist,
- **dass** sich der Crimpring (17) an einer vom Gehäuseboden (5) abgewandten Außenseite (18) des Druckrings (15) axial am Druckring (15) abstützt.

2. Kartusche (1) nach Anspruch 1,
**dadurch gekennzeichnet,**
**dass** der Crimpring (17) einen radial innenliegenden Innenrand (27) des Druckrings (15) umgreift.

3. Kartusche (1) nach Anspruch 1 oder 2,
**dadurch gekennzeichnet,**
**dass** der Druckring (15) an der Außenseite (16) des Deckels (12) axial indirekt über einen den Druckring (15) umgreifenden Halteabschnitt (28) des Crimprings (17) und/oder direkt abgestützt ist.

4. Kartusche (1) nach einem der vorhergehenden Ansprüche,
**dadurch gekennzeichnet,**
**dass** das Gehäuse (2) am Gehäusemantel (4) eine Ringstufe (59) aufweist, an der sich der Druckring (15) axial direkt oder indirekt abstützt.

5. Kartusche (1) nach einem der vorhergehenden Ansprüche,
**dadurch gekennzeichnet,**
**dass** das Gehäuse (2) am Gehäusemantel (4) eine Ringnut (60) aufweist, in die ein radial außenliegender Außenrand (61) des Druckrings (15) radial eingreift.

6. Kartusche nach einem der vorhergehenden Ansprüche,
**dadurch gekennzeichnet,**
- **dass** der Elektroanschluss (22) einen am Deckel (12) ausgebildeten Basisstecker (24) aufweist, der mit der Heizeinrichtung (11) elektrisch leitend verbunden ist und der mit einem Adapterstecker (25) steckbar ist, der mit der Energieversorgung elektrisch verbindbar ist,
- wobei der Basisstecker (24) radial innerhalb des Druckrings (15) angeordnet ist und am Deckel (12) von dessen Außenseite (16) axial nach außen vorsteht.

7. Kartusche (1) nach Anspruch 6,
**dadurch gekennzeichnet,**
**dass** der Elektroanschluss (22) außerdem den Adapterstecker (25) aufweist, der mit dem Basisstecker (24) axial gesteckt ist, so dass elektrische Kontakte (29) des Basissteckers (24) mit elektrischen Kontakten (30) des Adaptersteckers (25) elektrisch verbunden sind.

8. Kartusche (1) nach Anspruch 7,
**dadurch gekennzeichnet,**
- **dass** der Adapterstecker (25) mittels einer axialen Steckverbindung (31) mechanisch und elektrisch mit dem Basisstecker (24) verbunden ist,
- **dass** die Steckverbindung (31) eine Verrastung (32) aufweist, welche die mechanische Verbindung zwischen Adapterstecker (25) und Basisstecker (24) gegen ein Herausziehen entgegen der axialen Steckrichtung (35) sichert.

9. Kartusche (1) nach Anspruch 7 oder 8,
**dadurch gekennzeichnet,**
- **dass** sich der mit dem Basisstecker (24) gesteckte Adapterstecker (25) radial bis zum Druckring (15) und/oder zum Crimpring (17) erstreckt, und/oder
- **dass** der Adapterstecker (25) als Winkelstecker ausgestaltet ist, bei dem eine erste Steckrichtung (35), die durch eine Steckverbindung zum Stecken des Adaptersteckers (25) mit dem Basisstecker (24) definiert ist, gegenüber einer zweiten Steckrichtung (36) geneigt verläuft, die durch eine Steckverbindung zum Stecken des Adaptersteckers (25) mit einem dazu komplementären, mit der Energieversorgung verbundenen Anschlussstecker definiert ist.

10. Kartusche (1) nach einem der Ansprüche 4 bis 9,
**dadurch gekennzeichnet,**
- **dass** der Einlassstutzen (13) und/oder der Auslassstutzen (14) am Deckel (12) von dessen Außenseite (16) axial nach außen vorstehen,
- **dass** der Druckring (15) den Einlassstutzen (13) und/oder den Auslassstutzen (14) einfasst.

11. Kartusche (1) nach einem der vorhergehenden Ansprüche,
**dadurch gekennzeichnet,**
**dass** die Heizeinrichtung (11) am Deckel (12) ausgebildet ist und an einer dem Gehäuseboden (5) zugewandten Innenseite (41) des Deckels (12) angeordnet ist.

12. Kartusche (1) nach Anspruch 11,
**dadurch gekennzeichnet,**
- **dass** die Heizeinrichtung (11) eine Scheibe (42) aufweist, die einen axial zwischen der Scheibe (42) und dem Deckel (12) ausgebildeten Heizraum (43) axial begrenzt,
- **dass** der Einlassstutzen (13) mit dem Heizraum (43) fluidisch verbunden ist,
- **dass** die Scheibe (42) wenigstens eine axiale Verbindungsöffnung (44) aufweist, die den Heizraum (43) fluidisch mit einem rohseitigen Zuströmraum (45) verbindet, der zu einer Anströmseite (46) des Filterelements (8) führt.

13. Kartusche (1) nach Anspruch 12,
**dadurch gekennzeichnet,**
- **dass** die Scheibe (42) als Ringscheibe ausgestaltet ist, die einen an der Innenseite (41) des Deckels (12) ausgebildeten, axial nach innen abstehenden zentralen Anschlussstutzen (47) in Umfangsrichtung (3) umschließt,
- **dass** der Auslassstutzen (14) in einem Abströmraum (48) mündet, der vom Anschlussstutzen (47) in Umfangsrichtung (3) umschlossen ist.

14. Verfahren zum Herstellen einer Kraftstofffilterkartusche (1) nach einem der vorhergehenden Ansprüche,
- bei dem zuerst das Filterelement (8) in das Gehäuse (2) eingesetzt wird,
- bei dem anschließend der Deckel (12) und die Heizeinrichtung (11) in das Gehäuse (2) eingesetzt werden,
- bei dem anschließend der Druckring (15) aufgesetzt und direkt oder indirekt am Gehäuse (2) befestigt wird,
- bei dem zum Festlegen des Druckrings (15) am Gehäuse (2) ein Crimpring (17) verwendet wird, der mit einem die Gehäuseöffnung (6) einfassenden, am Gehäusemantel (4) ausgebildeten, stirnseitigen Gehäuserand (20) vercrimpt wird.

15. Verfahren nach Anspruch 14,
**dadurch gekennzeichnet,**
**dass** nach dem Vercrimpen des Crimprings (17) mit dem Gehäuserand (20) ein Adapterstecker (25) des Elektroanschlusses (22) mit einem am Deckel (12) ausgebildeten Basisstecker (24) des Elektroanschlusses (22) gesteckt wird.

## Claims

1. Fuel filter cartridge (1) for filtering and heating fuel for an internal combustion engine, comprising:
- a pot-shaped housing (2), which has a housing casing (4) running in circumferential direction (3), a housing base (5) and a housing opening (6) axially opposite the housing base (5),
- a filter element (8) inserted into the housing (2) for filtering the fuel, which in the housing (2) separates an untreated room (9) from a clean room (10),
- an electrical heating device (11) arranged in the housing (2) for heating the fuel,
- a cover (12) inserted into the housing (2) for closing the housing opening (6),
- an inlet connector (13) for the fuel, which is connected fluidically to the untreated room (9),
- an outlet connector (14) for the fuel, which is fluidically connected to the clean room (10),
- an electrical connector (22) arranged on the cover (12) for the electrical power supply of the heating device (11) which is connected electroconductively to the heating device (11),
**characterised in that**
- fuel filter cartridge (1) has a thrust ring (15) made of metal which is separate from the housing (2) and the cover (12), which thrust ring encompasses the electrical connector (22) which is secured directly or indirectly onto the housing (2) and which is supported axially on the cover (12) directly and/or indirectly on an outside (16) of the cover (12) averted from the housing base (5),
- for securing the thrust ring (15) onto the housing (2) a crimping ring (17) is provided, which is crimped to an end face housing edge (20) encompassing the housing opening (6) and formed on the housing casing (4),
- the crimping ring (17) and the thrust ring (15) are separate components, so that the thrust ring (15) is secured indirectly via the crimping ring (17) to the housing (2),
- the crimping ring (17) is supported axially on the thrust ring (15) on an outer side (18) of the thrust ring (15) averted from the housing base (5).

2. Cartridge (1) according to claim 1,
**characterised in that**
the crimping ring (17) encompasses a radially inner edge (27) of the thrust ring (15).

3. Cartridge (1) according to claim 1 or 2,
**characterised in that**
the thrust ring (15) is supported axially indirectly on the outer side (16) of the cover (12) via a holding section (28) of the crimping ring (17) encompassing the thrust ring (15) and/or is supported directly.

4. Cartridge (1) according to any of the preceding claims,
**characterised in that**
the housing (2) on the housing casing (4) has an annular ring step (59), on which the thrust ring (15) is supported axially directly or indirectly.

5. Cartridge (1) according to any of the preceding claims,
**characterised in that**
the housing (2) on the housing casing (4) has an annular groove (60), into which a radially outerlying outer edge (61) of the thrust ring (15) engages radially.

6. Cartridge (1) according to any of the preceding claims,
**characterised in that**
- the electrical connector (22) has a base plug (24) formed on the cover (12), which base plug is connected electroconductively to the heating device (11) and which can be plugged to an adapter plug (25) which can be connected electrically to the power supply,
- wherein the base plug (24) is arranged radially inside the thrust ring (15) and on the cover (12) projects outwards axially from its outer side (16).

7. Cartridge (1) according to claim 6,
**characterised in that**
the electrical connector (22) also includes the adapter plug (25) which is axially plugged to the base plug (24), so that electrical contacts (29) of the base plug (24) are connected electrically to electrical contacts (30) of the adapter plug (25).

8. Cartridge (1) according to claim 7,
**characterised in that**
- the adapter plug (25) is connected mechanically and electrically to the base plug (24) by means of an axial plug connection (31),
- the plug connection (31) has a catch mechanism (32) which secures the mechanical connection between the adapter plug (25) and base plug (24) from being pulled out opposite the axial plug-in direction (35).

9. Cartridge (1) according to claim 7 or 8,
**characterised in that**
- the adapter plug (25) plugged to the base plug (24) extends radially up to the thrust ring (15) and/or to the crimping ring (17), and/or
- the adapter plug (25) is designed as an angle plug, wherein a first plug-in direction (35), which is defined by a plug connection for plugging the adapter plug (25) to the base plug (24), is inclined relative to a second plug-in direction (36), which is defined by a plug connection for plugging the adapter plug (25) to a complementary connecting plug connected to the power supply.

10. Cartridge (1) according to any of claims 4 to 9,
**characterised in that**
- the inlet connector (13) and/or the outlet connector (14) on the cover (12) project axially outwards from its outer side (16),
- the thrust ring (15) encloses the inlet connector (13) and/or the outlet connector (14).

11. Cartridge (1) according to any of the preceding claims,
**characterised in that**
the heating device (11) is formed on the cover (12) and is arranged on an inner side (41) of the cover (12) facing the housing base (5).

12. Cartridge (1) according to claim 11,
**characterised in that**
- the heating device (11) has a disc (42), which axially delimits a heating chamber (43) formed axially between the disc (42) and the cover (12),
- the inlet connector (13) is fluidically connected to the heating chamber (43),
- the disc (42) has at least one axial connecting opening (44), which connects the heating chamber (43) fluidically to an untreated-side feed chamber (45) which leads to an inflow side (46) of the filter element (8).

13. Cartridge (1) according to claim 12,
**characterised in that**
- the disc (42) is designed as an annular disc, which encloses in circumferential direction (3) an axially inwardly protruding central connector (47) formed on the inner side (41) of the cover (12),
- the outlet connector (14) leads into an outflow chamber (48) which is surrounded by the connector (47) in circumferential direction (3).

14. Method for producing a fuel filter cartridge (1) according to any of claims, wherein
- firstly the filter element (8) is inserted into the housing (2),
- afterwards the cover (12) and the heating device (11) are inserted into the housing (2),
- afterwards the thrust ring (15) is fitted and is secured directly or indirectly onto the housing (2),
- for securing the thrust ring (15) onto the housing (2) a crimping ring (17) is used which is crimped to an end face housing edge (20) which encloses the housing opening (6) and is formed on the housing casing (4).

15. Method according to claim 14,
**characterised in that**
after crimping the crimping ring (17) to the housing edge (20) an adapter plug (25) of the electrical connector (22) is fitted with a base plug (24) of the electrical connector (22) formed on the cover (12).

## Revendications

1. Cartouche de filtre à carburant (1) destinée à filtrer et à chauffer le carburant d'un moteur à combustion interne, comprenant
- un boîtier en forme de pot (2), qui présente une enveloppe de boîtier (4) s'étendant dans une direction circonférentielle (3), une base de boîtier (5) et une ouverture de boîtier (6) opposée axialement à la base de boîtier (5),
- un élément filtrant (8) inséré dans le boîtier (2) pour filtrer le carburant, qui sépare un espace brut (9) d'un espace propre (10) dans le boîtier (2),
- un dispositif de chauffage électrique (11) agencé dans le boîtier (2) pour chauffer le carburant,
- un élément de recouvrement (12) inséré dans le boîtier (2) pour fermer l'ouverture de boîtier (6),
- une tubulure d'entrée (13) pour le carburant, qui est reliée de manière fluidique à l'espace brut (9),
- une tubulure de sortie (14) pour le carburant, qui est reliée de manière fluidique à l'espace propre (10),
- une connexion électrique (22) agencée au niveau de l'élément de recouvrement (12) pour une alimentation en énergie électrique du dispositif de chauffage (11), qui est reliée électriquement au dispositif de chauffage (11),
**caractérisée en ce que**,
- la cartouche de filtre à carburant (1) présente une bague de pression (15) en métal qui est séparée par rapport au boîtier (2) et par rapport à l'élément de recouvrement (12), qui entoure la connexion électrique (22), qui est fixée directement ou indirectement au boîtier (2) et qui est en appui directement et/ou indirectement sur une face extérieure (16) de l'élément de recouvrement (12) opposée à la base de boîtier (5), axialement sur l'élément de recouvrement (12),
- une bague de sertissage (17) est prévue pour fixer la bague de pression (15) au boîtier (2), qui est sertie avec un bord de boîtier avant (20) entourant l'ouverture de boîtier (6) et formée au niveau de l'enveloppe de boîtier (4),
- la bague de sertissage (17) et la bague de pression (15) sont des composants séparés, de telle sorte que la bague de pression (15) est fixée indirectement via la bague de sertissage (17) au boîtier (2),
- la bague de sertissage (17) est en appui axial sur la bague de pression (15) sur une face extérieure (18) de la bague de pression (15) opposée à la base de boîtier (5).

2. Cartouche (1) selon la revendication 1,
**caractérisée en ce que**,
la bague de sertissage (17) vient en prise avec un bord intérieur radialement à l'intérieur (27) de la bague de pression (15).

3. Cartouche (1) selon la revendication 1 ou 2,
**caractérisée en ce que**,
la bague de pression (15) est en appui axialement indirectement et/ou directement sur la face extérieure (16) de l'élément de recouvrement (12) via une section de maintien (28) venant en prise avec la bague de pression (15) de la bague de sertissage (17).

4. Cartouche (1) selon l'une des revendications précédentes,
**caractérisée en ce que**,
le boîtier (2) présente un gradin annulaire (59) sur l'enveloppe de boîtier (4), sur lequel la bague de pression (15) est en appui axialement directement ou indirectement.

5. Cartouche (1) selon l'une des revendications précédentes,
**caractérisée en ce que**,
le boîtier (2) présente une rainure annulaire (60) sur l'enveloppe de boîtier (4), dans laquelle un bord extérieur (61) radialement à l'extérieur de la bague de pression (15) vient en prise radialement.

6. Cartouche selon l'une des revendications précédentes,
**caractérisée en ce que**
- la connexion électrique (22) présente un raccord de base (24) formé sur l'élément de recouvrement (12), qui est relié de manière électriquement conductrice avec le dispositif de chauffage (11) et qui peut être raccordé avec un raccord d'adaptateur (25), qui peut être relié électriquement à l'alimentation en énergie électrique,
- dans laquelle le raccord de base (24) est agencé radialement à l'intérieur de la bague de pression (15) et faisant saillie axialement vers l'extérieur de l'élément de recouvrement (12) depuis sa face extérieure (16).

7. Cartouche (1) selon la revendication 6,
**caractérisée en ce que**,
la connexion électrique (22) présente en outre le raccord d'adaptateur (25), qui est raccordé axialement au raccord de base (24), de sorte que des contacts électriques (29) du raccord de base (24) sont reliés électriquement à des contacts électriques (30) du raccord d'adaptateur (25).

8. Cartouche (1) selon la revendication 7,
**caractérisée en ce que**
- le raccord d'adaptateur (25) est relié mécaniquement et électriquement au raccord de base (24) au moyen d'une connexion enfichable (31),
- la connexion enfichable (31) présente un encliquetage (32), qui sécurise la liaison mécanique entre le raccord d'adaptateur (25) et le raccord de base (24) à l'encontre d'un retrait opposé à la direction de raccordement axiale (35).

9. Cartouche (1) selon la revendication 7 ou 8,
**caractérisée en ce que**,
- le raccord d'adaptateur (25) raccordé avec le raccord de base (24) s'étend radialement jusqu'à la bague de pression (15) et/ou à la bague de sertissage (17), et/ou
- le raccord d'adaptateur (25) est conçu sous la forme d'un raccord coudé, via lequel une première direction de raccordement (35), qui est définie par une direction de raccordement pour raccorder le raccord d'adaptateur (25) avec le raccord de base (24), est inclinée par rapport à une seconde direction de raccordement (36), qui est définie par une direction de raccordement pour raccorder le raccord d'adaptateur (25) avec un connecteur de connexion qui lui est complémentaire et relié à l'alimentation en énergie électrique.

10. Cartouche (1) selon l'une des revendications 4 à 9,
**caractérisée en ce que**,
- la tubulure d'entrée (13) et/ou la tubulure de sortie (14) font saillie axialement vers l'extérieur sur l'élément de recouvrement (12) depuis sa face extérieure (16),
- la bague de pression (15) entoure la tubulure d'entrée (13) et/ou la tubulure de sortie (14).

11. Cartouche (1) selon l'une des revendications précédentes,
**caractérisée en ce que**,
le dispositif de chauffage (11) est formé sur l'élément de recouvrement (12) et est agencé sur une face intérieure (41) de l'élément de recouvrement (12) faisant face à la base de boîtier (5).

12. Cartouche (1) selon la revendication 11,
**caractérisée en ce que**,
- le dispositif de chauffage (11) présente un disque (42), qui délimite un espace de chauffage (43) réalisé axialement entre le disque (42) et l'élément de recouvrement (12),
- la tubulure d'entrée (13) est reliée de manière fluidique à l'espace de chauffage (43),
- le disque (42) présente au moins une ouverture de liaison axiale (44), qui relie l'espace de chauffage (43) de manière fluidique avec un espace d'afflux côté brut (45), qui conduit à une face amont (46) de l'élément filtrant (8).

13. Cartouche (1) selon la revendication 12,
**caractérisée en ce que**,
- le disque (42) est conçu sous la forme d'un disque annulaire, qui enferme un manchon de raccordement central (47) faisant saillie axialement vers l'intérieur au niveau de la face intérieure (41) de l'élément de recouvrement (12) dans la direction circonférentielle (3),
- le manchon de raccordement (14) débouche dans un espace de sortie (48) qui est enfermé par le manchon de raccordement (47) dans la direction circonférentielle (3).

14. Procédé de fabrication d'une cartouche de filtre à carburant (1) selon l'une des revendications précédentes,
- dans lequel l'élément filtrant (8) est d'abord inséré dans le boîtier (2),
- dans lequel ensuite l'élément de recouvrement (12) et le dispositif de chauffage (11) sont inséré dans le boîtier (2),
- dans lequel la bague de pression (15) est ensuite insérée et fixée directement ou indirectement au boîtier (2),
- dans lequel une bague de sertissage (17) est utilisée pour fixer la bague de pression (15) au boîtier (2) et est sertie avec un bord avant de boîtier (20) qui entoure l'ouverture de boîtier (6) et est formé au niveau de l'enveloppe de boîtier (4).

15. Procédé selon la revendication 14,
**caractérisé en ce que**,
après le sertissage de la bague de sertissage (17) avec le bord de boîtier (20), un raccord d'adaptateur (25) de la connexion électrique (22) est raccordé avec un raccord de base (24) formé au niveau de l'élément de recouvrement (12) de la connexion électrique (22).
